**Europäisches Patentamt**

**European Patent Office**

**Office européen des brevets**

(19)

(11) Veröffentlichungsnummer: **0 089 347**
**B1**

(12) # EUROPÄISCHE PATENTSCHRIFT

(45) Veröffentlichungstag der Patentschrift:
13.08.86

(21) Anmeldenummer: 82902712.7

(22) Anmeldetag: 27.08.82

(86) Internationale Anmeldenummer:
PCT/DE 82/00172

(87) Internationale Veröffentlichungsnummer:
WO 83/01044 (31.03.83 Gazette 83/08)

(51) Int. Cl.⁴: **B 60 T 13/74,** F 16 D 63/00 //
**F16D66/02, B60T17/18,**
**B60T8/00**

(54) **BREMSANLAGE FÜR EIN FAHRZEUG.**

(30) Priorität: 25.09.81 DE 3138330

(43) Veröffentlichungstag der Anmeldung:
28.09.83 Patentblatt 83/39

(45) Bekanntmachung des Hinweises auf die Patenterteilung:
13.08.86 Patentblatt 86/33

(84) Benannte Vertragsstaaten:
**AT BE CH DE FR GB LI NL SE**

(56) Entgegenhaltungen:
**WO-A-82/01752**
**DE-C-851 602**
**FR-A-587 350**
**FR-A-602 410**
**FR-A-1 272 090**
**US-A-2 962 144**
**US-A-3 778 118**
**US-A-3 778 118**
**US-A-3 899 061**

(73) Patentinhaber: **Dr.- Ing. Ludwig Pietzsch GmbH &**
**Co., Hertzstrasse 32- 34, D-7505 Ettlingen (DE)**

(72) Erfinder: **PIETZSCH, Ludwig, Im Rosengärtle 14,**
**D-7500 Karlsruhe 41 (DE)**
Erfinder: **STEHLIN, Bernhard, Heideweg 19, D-7500**
**Karlsruhe 31 (DE)**

(74) Vertreter: **Liesegang, Roland, Dr.- Ing.,**
**Sckellstrasse 1, D-8000 München 80 (DE)**

## Beschreibung

Die Erfindung betrifft eine Bremsanlage für ein Fahrzeug mit den Merkmalen des Oberbegriffs der Ansprüche 1 oder 9.

Die heute im Einsatz befindlichen üblichen Bremsanlagen für Kraftfahrzeuge arbeiten mit hydraulisch oder pneumatisch erzeugten, auf die Bremsbacken wirkenden Andrückkräften.

Pneumatische oder hydraulische Bremsanlagen dieser Art sind aufwendig hinsichtlich Anzahl und Aufbau ihrer Bauteile sowie hinsichtlich des erforderlichen Leitungssystems. Dies gilt insbesondere bei der Realisierung mehrerer, voneinander unabhängiger Bremskreise, wie sie heute in Kraftfahrzeugen aus Sicherheitsgründen gefordert werden. Auch wäre im Hinblick auf elektrisch arbeitende Zusatz- und Überwachungseinrichtungen von Bremssystemen in Kraftfahrzeugen, wie Antiblockiervorrichtung oder Bremsbelagverschleißüberwachung, eine elektrische Bremsbetätigung wünschenswert.

Elektromagnetbremsen für Fahrzeuge mit den Merkmalen des Oberbegriffs des Anspruchs 1 sind bekannt (US-A 3,778,118).

Die Anmelderin hat auch bereits einen im Dauerschlupt betreibbaren, regelbaren Reibmomenterzeuger vorgeschlagen (WO 82/01752), bei dem das Reibmoment über die Erfassung der magnetischen Feldstärke geregelt wird, um die Tot- bzw. Einstellzeiten abzukürzen.

Der Anwendung von solchen Elektromagnetbremsen in Fahrzeugen, insbesondere Kraftfahrzeugen, stand bisher entgegen, daß Remanenz auftritt, die auch nach dem Lösen der Bremse, d.h., nach dem Abschalten des Spulenstroms aufgrund des remanenten Magnetismus eine Restandrückkraft erzeugt. Zur Überwindung dieser durch Remanenz verursachten Andrückkraft ist zwar bekannt, eine Feder vorzusehen, welche unter Überwindung der durch Remanenz verursachten Andrückkraft die beim Bremsen zusammenwirkenden Reibelemente voneinander wegstellt (FR-PS 1 309 724). Die insbesondere beim Kraftfahrzeug erforderliche feinfühlige Dosierung der Bremswirkung ist mit dieser bekannten Konstruktion nicht möglich. Sie ist auch nicht mit Elektromagnetbremsen möglich, bei welchen der durch die Spule des Elektromagneten fließende Strom zur Kompensation von Temperaturschwankungen geregelt wird (US-A 3,899,061) oder bei welchen der Elektromagnet eine Bremslösekraft entgegen der Wirkung eines Permanentmagneten aufbringt (US-A 2,962,144), wobei der Magnetfluß und damit das Bremsmoment mit dem Luftspalt variabel ist.

Der Erfindung liegt die Aufgabe zugrunde, eine im Aufbau einfache Bremsanlage für Fahrzeuge zu schaffen, die eine fein dosierbare Bremsbetätigung unter Vermeidung der nachteiligen Auswirkungen einer Remanenz nach dem Losen der Bremse mit wenig Aufwand ermöglicht.

Zur Lösung dieser Aufgabe sind gemäß der Erfindung bei einer Bremsanlage der im Oberbegriff des Anspruchs 1 erwähnten Art die Merkmale des Kennzeichens des Anspruchs 1 oder alternativ die Merkmale des Kennzeichens des Anspruchs 9 vorgesehen.

Überraschend hat die Bremsanlage nach der Erfindung die gewünschte feine Dosierbarkeit. Dies folgt aus der Regelung des Bremsmomentes, welche das geschilderte Remanenzproblem ohne Verwendung einer Feder ausschaltet, indem beim Lösen der Bremse durch "Gegenregeln", d.h. Beaufschlagen des Elektromagneten mit einem dem Bremsbetätigungsstrom entgegenwirkenden Strom, die Remanenz auf Null geregelt wird. Das Bremsmoment wird dabei durch die Regelung des elektromagnetischen Flusses beeinflußt, der ohne die Erscheinung der Remanenz dem Bremsmoment proportional wäre.

Der elektromagnetische Fluß läßt sich in einfacher Weise, vorzugsweise mittels eines Hall-Generators, an jedem Fahrzeugrad messen. Bleibt beim Lösen der Bremse ein Fluß aufgrund von Remanenz im Material eines oder mehrerer Bremsenteile bestehen, so wird durch den Regler ein Strom in die Spule des Elektromagneten geschickt, der einen den "Remanenzfluß" kompensierenden Gegenfluß erzeugt. Dies geschieht mit einer solchen Geschwindigkeit, daß praktisch mit dem Lösen der Bremse auch die Andrückkraft wie bei üblichen hydraulischen oder pneumatischen Bremsen verschwindet.

Eine vorteilhafte Realisierung der Erfindung ist durch die Merkmale des Anspruchs 2 gekennzeichnet.

Gemäß einer besonders vorteilhaften Ausgestaltung der Erfindung bildet der Regler Teil einer elektromagnetischen Signalverarbeitungseinheit, welche außer den Komponenten für die bremsmomentabhängige Regelung weitere elektrische Komponenten, wie diejenige eines elektrischen Bremskraftverstärkers und/oder der Zentraleinheit einer Antiblockiervorrichtung und/oder einer Bremsbelagverschleißanzeige enthält. Anstatt den elektromagnetischen Fluß (oder direkt das Bremsmoment) zu messen und zu regeln, kann bei Kenntnis des Bremsenverhaltens dieses auch mittels eines Simulationsrechners simuliert werden und die in Abhängigkeit vom jeweiligen Bremsenzustand simulierten Signale können zum Regler zurückgeführt werden. Hierdurch wird eine sogenannte adaptive Regelung erzielt.

Die Bremse selbst läßt sich zweckmäßig als Vollscheibenbremse mit einem oder mehreren Reibpaarungen in Form von Bremslamellen, ausbilden. Zur Erhöhung der Sicherheit kann vorgesehen sein, daß ein die Bremse ständig im Betätigungssinne beaufschlagender Permanentmagnet vorgesehen ist, dem der Elektromagnet im Lösesinn der Bremse entgegenwirkt. Bei Stromausfall wird die Bremse automatisch angelegt. Dieses bei der Erfindung einfach realisierbare Sicherheitsmerkmal läßt sich bei einer hydraulischen oder penumatischen Bremse nicht oder allenfalls mit beträchtlichem Aufwand realisieren.

Zusammengefaßt lassen sich mit der Bremsanlage nach der Erfindung folgende Hauptvorteile erzielen:

- Alle Verbindungen zwischem dem Bremspedal und den Bremsen sind elektrisch leitende Kabel. Dies verringert den Installationsaufwand der Bremsanlage ganz erheblich.

- Die Baugruppen der Bremsanlage können zur Erhöhung der Betriebssicherheit leichter als bei pneumatischen oder hydraulischen Bremsanlagen redundant aufgebaut werden. Dabei werden wesentlich weniger Bauteile benötigt.

- Da bereits elektrische Signale vorliegen, ist bei Ausfall eines Bauteiles oder bei Bremsbackenverschleiß ohne Vorsehen zusätzlicher Sensoren eine Fehleranzeige am Armaturenbrett möglich.

- Elektrische Zusatzeinrichtungen, wie Antiblockiereinrichtungen, Bremskraftverstärker, Bremsbelagverschleißanzeige und dgl. lassen sich mit geringerem Aufwand als bei hydraulischen oder pneumatischen Bremsanlagen installieren und anpassen.

- Hydraulische oder pneumatische Zusatzgeräte werden überflüssig.

Die Bremsanlage nach der Erfindung eignet sich für Fahrzeuge aller Art, außer für Straßenfahrzeuge also auch für Schienen -und Luftfahrzeuge.

Die Erfindung ist im folgenden anhand schematischer Zeichnungen an Ausführungsbeispielen mit weiteren Einzelheiten näher erläutert.

Es zeigen:

Fig. 1 ein Schema einer Elektromagnetbremse gemäß der Erfindung für ein Kraftfahrzeug, wobei nur die wesentlichen Bremsenteile schematisch dargestellt sind;

Fig. 2 und 3 Blockschaltbilder von alternativen Regelkreisen für die Bremse nach Fig. 1;

Fig. 4 ein Schaltbild für eine Bremsanlage mit Elektromagnetbremsen gemäß Fig. 1 und

Fig. 5 einen Achsschnitt durch eine ausgeführte Elektromagnetbremse nach der Erfindung.

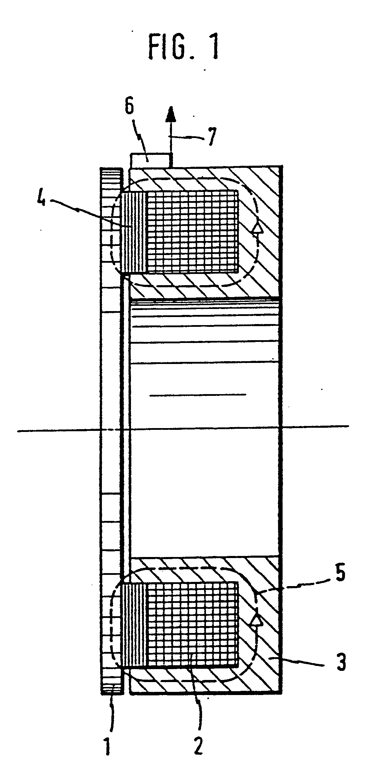

Die in Fig. 1 gezeigte Elektromagnetbremse hat eine Brems- oder Ankerscheibe 1 die drehbar, jedoch axial verschieblich mit dem zugehörigen Rad eines Kraftfahrzeuges (nicht gezeigt) verbunden ist.

Axialbenachbart der Ankerscheibe 1 ist ein Statorgehäuse 3 mit einem nicht drehenden Bauteil des Kraftfahrzeuges, wie einem Radlagergehäuse (nicht gezeigt) verbunden. In dem Statorgehäuse 3 ist die ringförmige Elektromagnetspule 2 sowie benachbart davon ein ringförmiger Bremsbacken 4 aus Bremsbelagmaterial untergebracht.

Ein in die Spule 2 fließender Strom erzeugt ein magnetisches Feld 5, welches eine Anziehungskraft zwischen Ankerscheibe 1 und Statorgehäuse 3 und damit ein Andrücken der Ankerscheibe 1 an den Bremsbelag 4 erzeugt. Der Magnetfluß 5 wird mittels eines am Statorgehäuse 3 angeordneten Hall-Generators 6 gemessen und in ein elektrisches Signal 7 ungewandelt. Statt des Hall-Generators kann auch ein Bremsmomentaufnehmer (nicht gezeigt) vorgesehen sein, der statt des Magnetflusses das dazu proportionale Bremsmoment mißt. Es ist klar, daß anstatt der beschriebenen Ausführung auch die Ankerscheibe axial unbeweglich ausgebildet sein kann, während das Statorgehäuse axial beweglich sein kann.

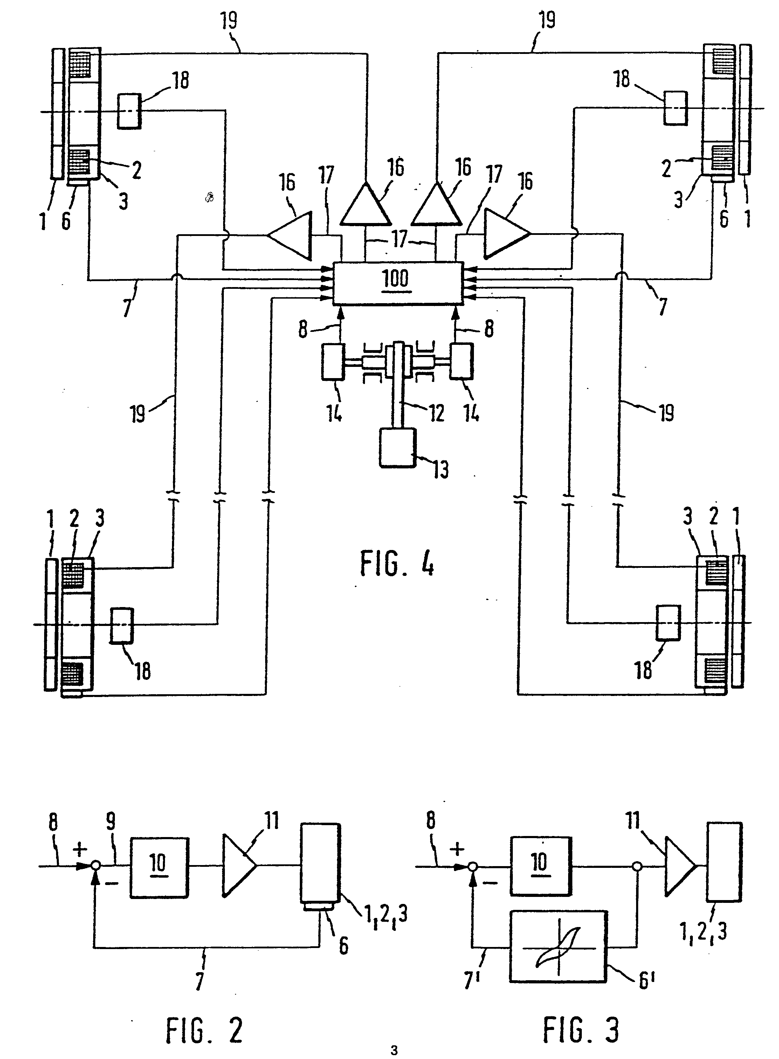

Eine Veränderung des Spulenstroms ruft eine proportionale Veränderung des magnetischen Flusses 5 und damit der Andrückkraft hervor. Da in der Regel das Material der Bremsenteile, insbesondere der Bremsscheibe, eine Remanenz, d.h. ein zeitweiliges Beibehalten der Magnetwirkung nach Abschalten des Spulenstromes, aufweist, muß die sich in andauernder Betätigungskraft äussernde Remanenz kompensiert werden. Dies geschieht mittels Regelschaltungen gemäß Fig. 2 oder 3.

Bei der Regelschaltung nach Fig. 2 wird ein von der Stellung des Bremspedals abgeleitetes Sollwertsignal 8 für das Bremsmoment an der Bremse mit dem Ausgangssignal 7 des Hall-Generators 6 nach Größe und Richtung verglichen. Die so ermittelte Regeldifferenz 9 wird im Regler 10 verstärkt und über eine einen Stromfluß in beiden Richtungen zulassende Leistungsendstufe (Verstärker) 16 der Bremse 1,3 zugeführt.

Bei der Alternative nach Fig. 3 ist statt eines Aufnehmers 6 für den magnetischen Fluß (oder für das Bremsmoment) ein Simulationsrechner 6' vorgesehen, der das (bekannte) Bremsenverhalten simuliert. Das vom Simulationsrechner erzeugte Ausgangssignal 7 wird wiederum dem Soll-Istwertvergleich zugeführt und die gebildete Regelabweichung in den Regler 10 eingegeben, der in gleicher Weise wie bei der Regelschaltung nach Fig. 2 über eine Leistungsendstufe 16 auf die Bremse 1, 2, 3 einwirkt.

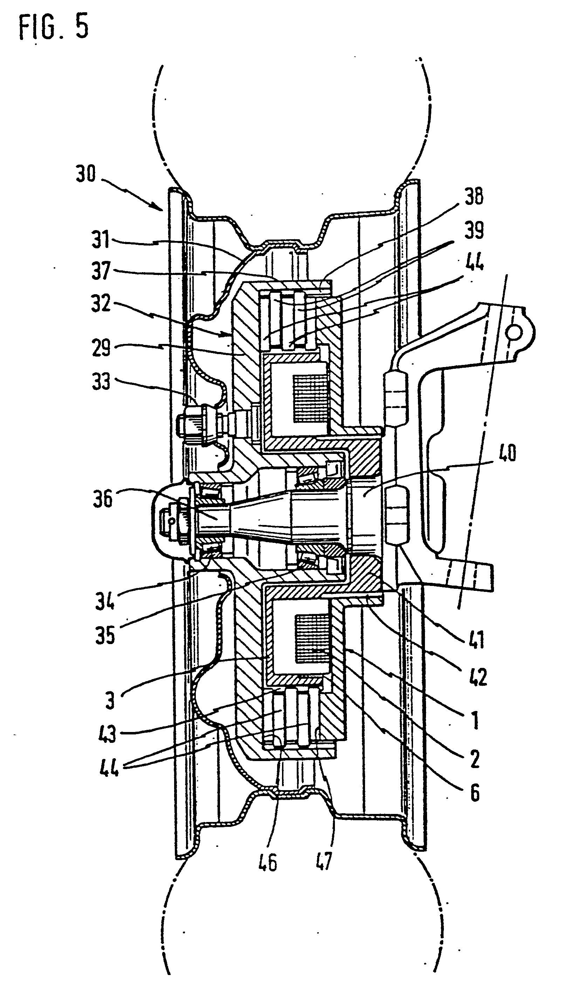

Ein Beispiel für den Aufbau einer Bremsanlage für ein Kraftfahrzeug mit vier Vollscheibenbremsen gemäß Fig. 1, nämlich je einer Scheibenbremse an jedem Fahrzeugrad, ist in Fig. 4 dargestellt. Ein Bremspedal 13 wirkt über eine Stange 12 auf zwei Winkel-, Weg- oder Kraftaufnehmer 14, die zur Größe der am Bremspedal aufgebrachten Fußkraft analoge elektrische Steuersignale abgeben. Diese Steuersignale 8 werden einer den Regler 10 nach den Fig. 2 und 3 enthaltenden Signalverarbeitungseinheit 100 zugeführt, die zusätzliche Komponenten, wie die Zentraleinheit einer Antiblockiervorrichtung, enthalten kann. Eingangsgrößen für diese Zentraleinheit werden in bekannter Weise von jedem Rad zugeordmeten Geschwindigkeitsgebern 18 bereitgestellt. Außerdem erhält die Signalverarbeitungseinheit die Ausgangssignale 7 von den Hall-Generatoren 6 als Eingangsgrößen. Zu jeder Radbremse gehört ein Verstärker 16, der mit einem in der Signalverarbeitungseinheit 100 gebildeten Ausgangssignal 17 angesteuert wird. Der Verstärker 16 gibt ein elektrisches Ausgangssignal 19 an die jeweilige Spule 2 der betreffenden Elektromagnetbremse ab. Dieses Ausgangssignal ist so beschaffen, daß es die durch die Bremsenmaterialien bedingte Remanenz kompensiert.

Fig. 5 zeigt eine ausgeführte Bremsanlage. Dabei sind funktionell übereinstimmende Teile mit den gleichen Bezugszahlen bezeichnet wie in den Fig. 1 bis 4.

Ein Fahrzeugrad 30, im vorliegenden Fall ein nicht angetriebenes Vorderrad eines Straßen-Kraftfahrzeuges, hat eine Radschüssel 31, in deren Innenraum eine insgesamt mit der Bezugszahl 32 bezeichnete Vollscheibenbremse eingebaut ist. Zu dem Fahrzeugrad 30 gehört eine Radscheibe 29, die über einen Mutternkranz mit Muttern 33 drehfest und axial unverschieblich mit der Radschüssel 31 verbunden ist und die über Radlager 34, 35 in üblicher Weise auf einem Achsschenkel 36 drehbar gelagert ist. Die Radscheibe 29 endet in einem axialen Flansch 37, der Innennuten 38 aufweist. In die Innennuten 38 greifen Außennuten von Bremslamellen 39 ein, welche drehfest, jedoch axial in den Innennuten 38 verschieblich sind. Auf einem Bund 40 des Achsschenkels 36 sitzt fest die Nabe 41 eines Statorgehäuses 3, wobei die Nabe 41 auf ihrer Außenseite mit Keilnuten 42 versehen ist. Mit den Keilnuten 42 wirken Innenkeilnuten an einem axialen Innenflansch einer Bremsscheibe 1 zusammen, die somit drehfest, jedoch axial verschieblich auf der Nabe 41 des Statorgehäuses 3 angeordnet ist. Das Statorgehäuse 3 hat an seinem Äußeren Umfang axiale Keilnuten 43, mit denen Innenkeilnuten von Bremslamellen 44 zusammenwirken, die zwischen den Bremslamellen 39 bzw. zueinander weisenden Stirnflächen 46, 47 der Radscheibe 29 und der Bremsecheibe 1 aufgenommen sind.

Wie in den bisherigen Figuren ist mit dem Bezugszeichen 6 ein am Statorgehäuse 3 befestigter Hall-Generator zum Messen des Magnetflusses und Umwandeln in eine diesem entsprechende Ausgangsspannung bezeichnet.

Wird die Spule 2 mit einem Strom beaufschlagt, z.B. durch die Signalverarbeitungseinheit 100, so wird ein Magnetfluß erzeugt, der die Bremsscheibe 1 an das Statorgehäuse 3 anzieht. Dadurch wird die Bremsscheibe 1 in Fig. 5 gesehen nach links bewegt, so daß sie die Bremslamellen 30, 44 gegeneinander bzw. an die rechte Stirnfläche der Radscheibe 29 drückt und somit eine Bremswirkung erzeugt. Diese Bremswirkung ist aufgrund der beschriebenen Anordnung fein dosierbar. Durch das Bremsscheibenmaterial, das Material des Statorgehäuses oder der Radscheibe 29 verursachte Remanenz wird durch Regelung des Magnetflusses kompensiert, so daß beim Lösen der Bremse die Bremswirkung wie bei einer hydraulischen oder pneumatischen Bremse sofort aufgehoben wird. Wie oben beschrieben kann dies durch Erzeugen eines der Remanenz entgegenwirkenden Magnetflusses geschehen, der die Bremsscheibe 1 von den Bremslamellen wieder wegstellt. Das Statorgehäuse 3 kann auch einen Permanentmagneten aufnehmen oder selbst als Permanentmagnet ausgebildet sein, oder die Bremsscheibe kann als Permanentmagnet mit einer derartigen Flußrichtung ausgebildet sein, daß die Bremsscheibe 1 an die Radscheibe 29 angezogen wird. In diesem Fall erzeugt der Stromfluß durch die Spule 2 eine der Permanentmagnetwirkung entgegengesetzte Wirkung und hebt sie bei normaler Fahrt mindestens auf. Zum Bremsen wird der Spulenstrom heruntergeregelt. Die Permanentmagnetkraft überwiegt dann die Elektromagnetkraft, so daß die Bremse angelegt wird. Dies setzt zwar eine ständige Stromdurchflutung der Spule 2 bei nicht angelegter Bremse voraus, sorgt jedoch dadurch für erhöhte Sicherheit, daß jedenfalls bei Ausfall der Stromquelle die Bremse angelegt wird.

Anstatt als Vollscheibenbremse ist selbstverständlich auch eine Konstruktion als Teilbelagscheibenbremse denkbar; doch hat die Vollscheibenbremse bei Anwendung der beschriebenen elektromagnetischen Betätigung Vorteile bezüglich der üblichen ringförmigen Anordnung einer Elektromagnetspule mit den zugehörigen Teilen. Es kann hierbei auf handelsübliche Bremsenteile zurückgegriffen werden. Wärmeprobleme sind beherrschbar, da die Flächenbelastung erheblich niedriger als bei Teilbelagscheibenbremsen ist und für die Wärmeabfuhr ausreichend Abstrahlflächen an der Radscheibe bzw. der Bremsscheibe zur Verfügung stehen, die durch eine Verrippung noch vergrößert werden können.

**Patentansprüche**

1. Bremsanlage für ein Fahrzeug mit einer Scheibenbremse, welche eine mit einem Fahrzeugrad (30) umlaufende Bremsscheibe (1; 29), ein mit einem nicht umlaufenden Fahrzeugteil (40) verbundenes Bremsgehäuse (3, 4) und mindestens einen Bremsbacken (4; 39, 44) aufweist, wobei durch Niederdrücken eines Bremspedals eine Andrückkraft zwischen Bremsbacken und Bremsscheibe mittelbar elektromagnetisch erzeugt wird und wobei die Bremsscheibe und das Bremsgehäuse eine Ankerscheibe (1) und ein Statorgehäuse (3) mit Spule (2) eines Elektromagneten (1, 2, 3) umfassen, dadurch gekennzeichnet, daß ein jedem zu bremsenden Fahrzeugrad (30) der von Elektromagneten (1, 2, 3) der in den Bremsenteilen erzeugte magnetische Fluß gemessen wird, und daß das Bremsmoment mittels eines Reglers (10) ausgehend von dieser Messung durch Beeinflussen des magnetischen Flusses mittels Variation des durch die Spule (2) des Elektromagneten fließenden Stromes geregelt wird.

2. Bremsanlage nach Anspruch 1, dadurch gekennzeichnet, daß über das Bremspedal ein elektrischer Weg- oder Kraftaufnehmer (14) beaufschlagt wird, der die Stromzufuhr zur Spule (2) des Elektromagneten abhängig von der Pedalstellung verändert, wobei die Eingänge des Reglers (10) von den Ausgangssignalen eines elektrischen Weg- oder Kraftaufnehmers (14) und eines Sensors (6, 6') zum Messen des magnetischen Flusses gebildet sind.

3. Bremsanlage nach Anspruch 2, dadurch gekennzeichnet, daß als Sensor (6) ein Hall-Generator verwendet ist.

4. Bremsanlage nach einem der Ansprüche 1 bis 3, dadurch gekennzeichnet, daß der Regler Teil einer elektronischen Signalverarbeitungseinheit (100) ist, welche außer den Komponenten für die bremsmomentabhängige Regelung weitere elektrische Komponenten, wie diejenige eines elektrischen Bremskraftverstärkers und/oder der Zentraleinheit einer Antiblockiervorrichtung und/oder einer Bremsbelagverschleißanzeige enthält.

5. Bremsanlage nach Anspruch 4, dadurch gekennzeichnet, daß zwischen die Signalverarbeitungseinheit (100) und die einzelnen Elektromagneten (1, 2, 3) an jedem Fahrzeugrad je ein Verstärker (16) eingeschaltet ist.

6. Bremsanlage nach Anspruch 1, dadurch gekennzeichnet, daß der Regler (10) als Eingangsgröße ein von einem Simulationsrechner bereitgestelltes Rückführsignal erhält.

7. Bremsanlage nach einem der Ansprüche 1 bis 6, dadurch gekennzeichnet, daß die Bremse als Vollscheibenbremse mit einem oder mehreren Reibpaarungen in Form von Bremslamellen (39, 40), ausgebildet ist.

8. Bremsanlage nach einem der Ansprüche 1 bis 7, dadurch gekennzeichnet, daß ein die Bremse ständig im Betätigungssinne beaufschlagender Permanentmagnet vorgesehen ist, dem der Elektromagnet im Lösesinn der Bremse entgegenwirkt.

9. Bremsanlage für ein Fahrzeug mit einer Scheibenbremse, welche eine mit einem Fahrzeugrad (30) umlaufende Bremsscheibe (1, 29), ein mit einem nicht umlaufenden Fahrzeugteil (40) verbundenes Bremsgehäuse (3, 41) und mindestens einen Bremsbacken (4; 39, 44) aufweist, wobei durch Niederdrücken eines Bremspedals eine Andrückkraft zwischen Bremsbacken und Bremsscheibe mittelbar elektromagnetisch erzeugt wird und wobei die Bremsscheibe und das Bremsgehäuse eine Ankerscheibe (1) und ein Statorgehäuse (3) mit Spule (2) eines Elektromagneten (1, 2, 3) umfassen, dadurch gekennzeichnet, daß ein Regler (10) zum Regeln des Bremsmomentes vorgesehen ist, und ein Eingang dieses Reglers von einer das Bremsmoment bzw. eine damit linear veränderliche Größe simulierende Vorrichtung (6') gebildet ist, und daß der Regler den durch die Spule (2) des Elektromagneten (1, 2, 3) fließenden Strom entsprechend beeinflußt.

10. Bremsanlage nach Anspruch 9, dadurch gekennzeichnet, daß die das Bremsmoment simulierende Vorrichtung ein Simulationsrechner (6') ist.

**Claims**

1. A braking system for a vehicle, having a disc brake comprising a brake disc (1; 29) capable of rotation with a vehicle road wheel (30), a brake housing (3, 41) connected to a non-rotating part (40) of the vehicle, and at least one pad assembly (4; 39, 44), in which depressing of a brake pedal produces indirectly electro-magnetically a pressing force between the pad assembly and the brake disc, and in which the brake disc and the brake housing include an armature disc (1) and a stator casing (3) with a coil (2) of an electromagnet (1, 2, 3), characterized in that the magnetic flux, which the electromagnet (1, 2, 3) produces in the brake components, is measured on each of the vehicle wheels (30) to be braked, and that the braking moment is controlled by means of a controller (10) which therefore takes said measurement as a basis and influences on the magnetic flux by varying the current flow through the coil (2) of the electromagnet.

2. The braking system according to claim 1, characterized in that through the brake pedal an electric displacement or force transducer (14) is actuated, this transducer varying the current fed into the coil (2) of the electromagnet in response to the pedal position, the inputs to the controller (10) being formed by the output signals from an electric displacement or force transducer (14) and from a sensor (6, 6') for measuring the magnetic flux.

3. The braking system according to claim 2, characterized in that a Hall generator is used as the sensor (6).

4. The braking system according to any of claims 1 to 3, characterized in that the controller is part of an electronic signal processing unit (100) which includes, besides the components of the braking moment sensitive control, further electric components, such as for an electric brake energizer and/or for the central unit of an antiskid device and/or for a friction pad wear warning indicator.

5. The braking system according to claim 4, characterized in that an amplifier (16) each is connected between the signal processing unit (100) and the respective electromagnets (1, 2, 3) on each vehicle wheel.

6. The braking system according to claim 1, characterized in that the input variable to the controller (10) is a feedback signal furnished by a simulation computer.

7. The braking system according to any of claims 1 to 6, characterized in that the brake is designed as a full disc type having one or more pairs of friction elements in the form of brake plates (39, 40).

8. The braking system according to any of claims 1 to 7, characterized in that a permanent magnet is provided which is constantly acting upon the brake in the direction of its actuation, and which is counteracted by the electromagnet in the direction of brake release.

9. A braking system for a vehicle, having a disc brake comprising a brake disc (1; 29) capable of rotation with a vehicle road wheel (30), a brake housing (3, 41) connected to a non-rotating part (40) of the vehicle, and at least one pad assembly (4; 39, 44), in which depressing of a brake pedal produces indirectly electro-magnetically a pressing force between the pad assembly and the brake disc, and in which the brake disc and the brake housing include an armature disc (1) and a stator casing (3) with a coil (2) of an electromagnet (1, 2, 3c), characterized in that a controller (10) for controlling the braking moment is provided, and that an input to said controller is formed by a device (6') for simulating the braking moment and a quantity which is linearly variable with said braking moment, respectively, and that the controller is influencing on the current flow through the coil (2) of the electromagnet (1, 2, 3) accordingly.

10. The braking system according to claim 9, characterized in that the device simulating the braking moment is a simulation computer (6').

**Revendications**

1. Système de freinage pour un véhicule, le système ayant un frein à disque comprenant un disque de frein (1; 29) apte à tourner avec une roue (30) du véhicule, un boîtier de frein (3, 41), relié avec une partie non-rotative (40) du véhicule, et au moins une plaquette (4; 39, 44), dans lequel l'actionnement d'une pédale de frein produit indirectement, et par voie électro-magnétique, une force de pression entre la plaquette et le disque de frein, et que le disque de frein et le boîtier du frein comprennent un induit (1) en disque et un carter de stator (3) avec la bobine (2) d'un électro-aimant (1, 2, 3), caractérisé en ce que le flux magnétique que produit l'électro-aimant (1, 2, 3) dans les pièces du frein est mesuré sur chacune des roues (30) à freiner du véhicule, et que le couple de freinage est réglé par l'intermédiaire d'un régulateur (10) sur la base de ce mesurage et en agissant sur le flux magnétique en variant le courant traversant la bobine (2) de l'électro-aimant.

2. Système de freinage selon la revendication 1, caractérisé en ce que, par l'intermédiaire de la pédale, un capteur électrique de déplacement ou de force (14) est actionné, ce capteur variant l'alimentation en courant de la bobine (2) de l'électro-aimant en fonction de la position de la pédale, les entrées du régulateur (10) étant constituées par les signaux de sortie d'un capteur électrique (14) de déplacement ou de force et d'un détecteur (6, 6') pour la mesure du flux magnétique.

3. Système de freinage selon la revendication 2, caractérisé en ce qu'un générateur Hall est utilisé comme le détecteur (6).

4. Système de freinage selon l'une quelconque des revendications 1 à 3, caractérisé en ce que le régulateur fait partie d'une unité électronique de traitement de signaux (100) qui comprend, à part les composants pour la régulation en fonction du couple de freinage, d'autres composants électriques, tels que ceux d'un servofrein électrique et/ou de l'unité centrale d'un dispositif d'antiblocage et/ou d'un dispositif d'alerte et d'indication de l'usure des garnitures de plaquette.

5. Système de freinage selon la revendication 4, caractérisé en ce qu'un amplificateur (16) chacun est intercalé entre l'unité de traitement des signaux (100) et les électro-aimants respectifs (1, 2, 3) sur chacune des roues du véhicule.

6. Système de freinage selon la revendication 1, caractérisé en ce que la quantité d'entrée que reçoit le régulateur (10) est un signal de rétroaction fourni par un ordinateur de simulation.

7. Système de freinage selon l'une quelconque des revendications 1 à 6, caractérisé en ce que le frein est du type frein à disque complet, équipé d'une ou de plusieurs paires d'éléments de friction sous forme de lames (39, 40).

8. Système de freinage selon l'une quelconque des revendications 1 à 7, caractérisé en ce que l'on dispose d'un aimant permanent qui agit constamment sur le frein dans le sens de son actionnement et auquel s'oppose l'électro-aimant agissant dans le sens du relâchement du frein.

9. Système de freinage pour un véhicule, le système ayant un frein à disque comprenant un disque de frein (1; 29) apte à tourner avec une roue (30) du véhicule, un boîtier de frein (3, 41), relié avec une partie non-rotative (40) du véhicule; et au moins une plaquette (4; 39, 44), dans lequel l'actionnement d'une pédale de frein produit indirectement, et par voie électro-magnétique, une force de pression entre la plaquette et le disque de frein, et que le disque de frein et le boîtier du frein comprennent un induit (1) en disque et un carter de stator (3) avec la bobine (2) d'un électro-aimant (1, 2, 3), caractérisé en ce que le couple de freinage est réglé par un régulateur (10) dont une entrée est constituée par un dispositif (6') qui simule le couple de freinage ou, respectivement, une quantité qui varie linéairement avec ce dernier, et que ledit régulateur agit, en conséquence, sur le courant traversant la bobine (2) de l'électro-aimant (1, 2, 3).

10. Système de freinage selon la revendication 9, caractérisé en ce que le dispositif qui simule le couple de freinage est un ordinateur de simulation (6').

# FIG. 1

FIG. 4

FIG. 2

FIG. 3

FIG. 5